# EUROPÄISCHE PATENTSCHRIFT

(11) **EP 1 337 572 B1**
(45) Veröffentlichungstag und Bekanntmachung des Hinweises auf die Patenterteilung: **19.01.2011**
(21) Anmeldenummer: 01998572.0
(22) Anmeldetag: 30.11.2001
(51) Int. Cl.: C08G 18/08, C09D 175/04, C08G 18/42, C08G 18/66, C08G 18/12

(54) **VERWENDUNG VON WÄSSRIGEN, PHYSIKALISCH HÄRTBAREN BESCHICHTUNGSSTOFFEN AUF POLYURETHANBASIS ALS HAFTGRUNDIERUNG FÜR LACKIERUNGEN**
AQUEOUS, PHYSICALLY CURABLE POLYURETHANE-BASED COATING MATERIALS FOR USE AS A WASH PRIMER FOR COATINGS
UTILISATION DE MATIERES DE REVETEMENT A BASE DE POLYURETHANNE, AQUEUSES ET DURCISSABLES PHYSIQUEMENT, COMME APPRET D'ADHERENCE POUR DES PEINTURES

(30) Priorität: 01.12.2000 DE 10059886
(43) Veröffentlichungstag der Anmeldung: 27.08.2003
(73) Patentinhaber: BASF Coatings GmbH, 48165 Münster (DE)
(72) Erfinder: LETTMANN, Bernhard, 48317 Drensteinfurt (DE); DOPP, Andreas, 48308 Senden 2 (DE); GRABBE, Michael, 48308 Senden (DE); RAVN, Henrik, DK-6000 Kolding (DK)
(74) Vertreter: Leifert & Steffan
(86) Internationale Anmeldenummer: PCT/EP2001/014020
(87) Internationale Veröffentlichungsnummer: WO 2002/044233

(56) Entgegenhaltungen:
- EP-A- 0 749 993
- US-A- 5 326 596
- PATENT ABSTRACTS OF JAPAN vol. 2000, no. 04, 31. August 2000 (2000-08-31) & JP 2000 026798 A (DAINIPPON INK &CHEM INC), 25. Januar 2000 (2000-01-25)

## Beschreibung

Die vorliegende Erfindung betrifft die Verwendung von wäßrigen, physikalisch härtbaren Beschinhtnngsstoffen auf Polyurethanbasis als Haftgrundierung für Lackierungen. Außerdem betrifft die vorliegende Erfindung ein neues Verfahren zum Lackieren von unbeschichteten Kunststoffoberflächen und von Altlackierungen.

Nutzfahrzeuge, wie Busse, Lastkraftwagen, Bagger oder Traktoren, oder PKW, insbesondere Taxis, werden des öfteren ganz oder teilweise umlackiert, insbesondere, wenn die Nutzfahrzeuge den Besitzer gewechselt haben. Im allgemeinen werden die Altlackierungen mit einer neuen Lackierung überlackiert. Damit die neuen Lackierungen fest auf dem Untergrund haften, müssen die Atlackierungen häufig angeschliffen werden, was insbesondere bei großen Nutzfahrzeugen aufwendig und daher teuer ist.

Um diese aufwendige Vorbehandhung der Altlackierungen zu vermeiden, werden derzeit konventionelle Haftgrundierungen verwendet, die einen hohen Anteil an organischen Lösemitteln enthalten. Aus wirtschaftlichen und ökologischen Gründen wollen die Anwender inzwischen die konventionelle Haftgrundierungen durch wäßrige ersetzen. Die bisher bekannten wäßrigen Haftgrundierungen machen aber erneut eine Vorbehandlung wie das Anschleifen notwendig.

Konventionelle Haftgrundierungen sowie wässrige Haftgrundierungen werden imRömpp Lexikon Lacke und Druckfarben, Georg Thieme Verlag, Stuttgart, New York, 1998, Seite 272, beschrieben.

Die EP 0 749 993 A beschreibt einen wässrigen, physikalisch härtbaren, thixotropen Beschichtungsstoff auf Polyurethanbasis, der vorzugsweise etwa 40 Gewichtsprozent an Pigmenten und Füllstoffen enthält.

Die US 5 326 596 A beschreibt ein Verfahren zur Herstellung von Mehrschichtlackierungen auf Metallsubstraten, in denen ein wässriger Beschichtungsstoff, der eine carboxyfunktionelle Polyurethanemulsion enthält, als Primer verwendet wird.

Die JP 2000 026798 A beschreibt ein wässriges Grundierungsmittel enthaltend ein Polyesterpolyurethan mit seitenständig gebundenen Carboxylgruppen, dass als Haftvermittler auf verschiedenen Substraten, vorzugsweise Kunststoffsubstraten, eingesetzt wird.

Vergleichbare Probleme treten auch bei der Reparaturlackierung von Nutzfahrzeugen und PKW auf Hier kommt es häufig in der unmittelbaren Umgebung der ausgebesserten Schadstelle, d. h. den Auslaufzonen, zu einer Enthaftung der Reparaturlackierung. Dies ist bei Kleinflächenreparaturen besonders auffällig. Wenn hier die Reparaturlackierungen wegbrechen oder ausreißen, entstehen deutlich sichtbare Kanten, die die Reparatorurlackierugen, die über die Originallackierung, hinausragen, sogar ganz umlafen können. Die

Reparaturlackierungen wirken dann wegen der optisch harten Übergangszonen insgesamt wie "aufgeklebte Pflaster".

Vergleichbare Haftungsprobleme treten bei der Lackierung von unbeschichteten Kunstoffoberflächen auf.

Aufgabe der vorliegenden Erfindung ist es, wäßrige, physikalisch härtbare Beschichtungsstoffe zu finden, die sich als Haftgrundierungen, insbesondere auf unbeschichteten Kunststoffoberflächen oder Altlackierungen, verwenden lassen, und die eine aufwendige Vorbehandlung der unbeschichteten Kunststoffoberflächen oder Altlackierungen vor der Lackierung unnötig machen.

Außerdem war es die Aufgabe der vorliegenden Erfindung, ein neues Verfahren zur Lackierung von unbeschichteten Kunststoffoberflächen und Altlackierungen unter Verwendung von wäßrigen Haftgundierungen zu finden, das keine Vorbehandlung der unbeschichteten Kunststoffoberflächen oder der Altlackierungen vor der Lackierung erfordet.

Demgemäß wurde die neue Verwendung von wäßrigen, physikalisch härtbaren, strukturviskosen oder thixotropen, klaren und transparenten Beschichtungsstoffen auf Polyurethanbasis als Haftgrundierung für Lackierungen gefunden.

Im folgenden werden die neue Verwendung als "erfindungsgemäße Verwendung" und die wäßrige, physikalisch härtbare, strukturviskose oder thixotrope, klare und tranparente Haftgrundierung als "erfindungsgemäße Haftgrundierung bezeichnet.

Außerdem wurde das neue Verfahren zur Lackierung von unbeschichteten Kunststoffoberflächen und Altlackierungen durch Applikation mindestens eines Lacks auf die unbeschichteten Kunststoffoberflächen oder die Altlackierungen und Härtung der resultierenden Lackschicht(en) gefunden, bei dem man auf die unbeschichteten Kunststoffoberflächen oder die Altlackierungen eine erfindungsgemäße Haftgrundierung appliziert und mit mindestens einem Lack überlackiert.

Im folgenden wird das neue Verfahren als "erfindungsgemäßes Verfahren" bezeichnet.

Weitere erfindungsgemäße Gegenstände gehen aus der Beschreibung hervor.

Die erfindungsgemäßen Haftgrundierungen sind wäßrig, physikalisch härtbar struturviskos oder thixotrop sowie klar und transparent.

Im Rahmen der vorliegenden Erfindung bedeutet die Eigenschaft "wäßrig", daß die erfindungsgemäßen Haftgrundierungen keine oder untergeordnete Mengen an organischen Lösemitteln enthalten. Untergeordnete Mengen sind solche Mengen, die wäßrige Natur der erfindungsgemäßen Haftgrundierungen nicht zerstören.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungastoff, wobei die Verknüpfung innerhalb der Beschichtung über Schlaufenbildung der Polymermoleküle filmbildende Komponenten oder der Bindemittel (zu dem Begriff vgl. Römpp Lexikon Lacke und Drunkfarben, Georg Thieme Verlag, Stuttgart, New York, 1998, >>Bindemittel<<, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, >>Härtung<<, Seiten 274 und 275). Üblicherweise sind hierfür keine Vernetzungsmittel notwendig. Gegebenenfalls kann die physikalische Härtung durch Luftsanerstoff, Hitze oder durch Bestrahlen mit aktinischer Strahlung unterstützt werden.

Die Eigenschaft "strukturvikos" bedeutet, daß die erfindungsgemäßen Haftgrundierungen bei höheren Schubspannungen oder höherem Geschwindigkeitsgefälle kleiner ist als bei niedrigen Werten (vgl. Römpp Lexikon Lacke und Druckfarben, Georg Thieme Verlag, Stuttgart, New York, 1998, Seite 546, >>Strukturviskosität<<).

Die Eigenschaft "thixotrop" bedeutet, daß bei konstantem Geschwindigkeitsgefälle die Viskosität von der Scherdauer abhängig ist (vgl. Römpp Lexikon Lacke und Druckfarben, Georg Thieme Verlag, Stuttgart, New York, 1998, Seite 564, >>Thixotropie<<).

Dieses Viskositätsverhalten trägt einerseits den Bedürfnissen der Spritzapplikation und andererseits auch den Erfordernissen hinsichtlich Lager- und Absetzstabilität Rechnung: Im bewegten Zustand, wie beispielsweise beim Umpumpen einer erfindungsgemäßen Haftgrundierung in der Ringleitung der Lackieranlage und beim Versprühen, nimmt die erfindungsgemäße Haftgrundierung einen niederviskosen Zustand ein, der eine gute Verarbeitbarkeit gewährleistet. Ohne Scherbeanspruchung hingegen steigt die Viskosität an und gewährleistet auf diese Weise, daß die bereits auf der unbeschichteten Kunststoffoberfläche oder der Altlackierung befindliche Haftgrundierung eine verringerte Neigung zum Ablaufen an senkrechten Flächen zeigt ("Läuferbildung") In gleicher Weise führt die höhere Viskosität im unbewegten Zustand, wie etwa bei der Lagerung, dazu, daß ein Absetzen von gegebenfalls vorhandenen festen Bestandteilen größtenteils verhindert wird oder ein Wiederaufrühren der während der Lagerzeit nur schwach abgesetzten festen Bestandteilen gewährleistet ist.

Die erfindungsgemäßen Haftgrundierungen sind klar und transparent. Die Eigenschaften "klar" und "transparent" bedeuten, daß die erfindungsgemäßen Haftgrundierungen ohne Trübung transparent sind, so daß in den Zonen, die von den erfindungsgemäßen Haftgrundierungen bedeckt, aber nicht überlackiert sind, die Altlackierungen noch zu sehen sind. Dieses Eigenschaftsprofil ist insbesondere für die Reparaturlackierung von Bedeutung. Dabei können die Altlackierungen ohne Farbtonverschiebung zu sehen sein.

Die erfindungsgemäßen Haftgrundierungen enthalten mindestens ein in Wasser lösliches oder dispergierbares Polyurethan als filmbildende Komponente oder Bindemittel. Im Grunde kommen alle üblichen und bekannten Polyurethane in Betracht, sofern sie in Wasser löslich oder dispergierbar und physikalisch härtbar sind. Beispiele geeigneter Polyurethane und ihrer wäßrige Dispersionen sind beispielsweise ans den Patentanmeldungen EP 0 089 497 A1, EP 0 256 540 A1, EP 0 260 447 A1, EP 0 297 576 A1, WÖ 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299148 A1, EP 0 394 737 A1, EP 0 590 484 A1, EP 0 234 362 A1, EP 0 234 361 A1, EP 0 543 817 A1, WO 95/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1, EP 0 817 684, Spalte 5, Zeilen 31 bis 45, DE 44 37 535 A1, Seite 7, Zeile 8; bis Seite 8, Zeile 49, EP 0 787 195 A1, DE 40 05 961 A1, DE 41 10 520 A1, EP 0 752 455 B1, DE 198 55 455 B 1, DE 199 488 121 A1, DB 198 469 171 A1, EP 0 788 523 B1 oder WO 95/12626 bekannt.

Vorzugsweise werden Polyurethane verwendet, die herstellbar sind, indem man mindestens ein Diisocyanat mit mindestens einem Polyol, ausgewählt aus der Gruppe, bestehend aus gesättigten und/oder ungesättigten höhermolekularen und/oder niedermolekularen Polyolen, und Verbindungen, durch welche stabilisierende (potentiell) ionische und/oder nichtionische funktionelle Gruppen eingeführt werden, zu einem Isocyanatgruppen enthaltenden Polyurethanpräpolymeren umsetzt, wonach man das Polyurethanpräpolymer mit einem Kettenverlängerungmittel umsetzt und das resultierende Polyurethan neutralisiert.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Düsocyanatocyclohexan, 1,3-Diisocyanatocyclohexan, 1,4-Düsocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentylcyclohexan, oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohex-1-yl)methan eines trans/trans-Gehalts von bis zu 30 Gew.-%, vorzugsweise 25 Gew.-% und insbesondere 20 Gew.-%, wie es in den Patentanmeldungen DE 44 14 032 A1, GB 1220717 A1, DE 16 18 795 A1 oder DE 17 93 785 A1 beschrieben wird, bevorzugt Bis(4-isocyanatocyclohex-1-yl)methan, Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethylcyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan,1-Isocyanato-2-(4-isocyanatobut-1-yl)-cyclohexan oder HDI, insbesondere Bis(4-isocyanatocyclohex-1-yl)methan;

Um Verzweigungen einzuführen, können auch untergeordnete Mengen an Polyisocyanaten verwendet werden. Beispiele geeigneter Polyisocyanate sind Isocyanurat-, Biuret-, Allophanat-, Iminooxadiazindion-, Urethan-, Harnstoff Carbodiimid und/oder Uretdiongruppen aufweisende Polyisocyanate, die in üblicher und bekannter Weise aus den vorstehend beschriebenen Diisocyanaten hergestellt werden; Beispiele geeigneter Herstellungsverfahren und Polyisocyanate sind beispielsweise aus den Patentschriften CA 2,163,591 A, US 4,419,513 A, US 4,454,317 A, EP 0 646 608 A, US 4,801,675 A, EP 0 183 976 A 1, DE 40 15 155 A1, EP 0 303 150 A1, EP 0 496 208 A1, EP 0 524 500 A1, EP 0 566 037 A1, US 5,258,482 A, US 5,290,902 A , EP 0 649 806 A1, DE 42 29 183 A1 oder EP 0 531 820 A1 bekannt.

Um hierbei der Gefahr des Gelierens zu begegnen, können noch Monoisocyanate mit verwendet werden. Beispiele geeigneter Monoisocyanate sind Phenylisocyanat, Cyclohexylisocyanat oder Stearylisocyanat oder Vinylisocyanat, Methacryloylisocyanat und/oder 1-(1-Isocyanato-1-methylethyl)-3-(1-methylethenyl)-benzol (TMI^{®} der Firma CYTEC).

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure; 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die umesterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen.

Beispiele geeigneter Diole sind Ethylenglykol, 1,2- oder 1,3-Propandiol,1,2-, 1,3-oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1- Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypropyl)-benzol.

Von diesen Diolen sind 1,6-Hexandiol und Neopentylglykol besonders vorteilhaft und werden deshalb besonders bevorzugt verwendet.

Die vorstehend genannten Diole können auch als solche für die Herstellung der erfindungsgemäß zu verwendenden Polyurethane eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der erfindungsgemäß zu verwendenden Polyurethane, insbesondere als Kettenverlängerungsmittel eingesetzt werden (vgl. die Patentschrift EP 0 339 433 A1).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR)ₘ- CH₂-O-)- aus. Hierbei ist der Index m bevorzugt 4 bis 6 und der Substitutent R¹ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR¹)ₒ-)ₚOH, wobei der Substituent R¹ = Wasserstoff oder ein niedriger, gegebenenfalls substituierter Alkylrest ist, der Index 0 = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten erfindungsgemäß zu verwendenden Polyurethane in Wasser anquellen. Andererseits können sie in Mengen verwendet werden, welche die nichtionische Stabilisierung der Polyurethane gewährleistet. Sie dienen dann als die nachstehend beschriebenen funktionellen nichtionischen Gruppen (a3).

Weitere Beispiele geeigneter Polyole sind Poly(meth)acrylatdiole, Polycarbonatediole oder Polyolefinpolyole wie POLYTAIL® der Firma Mitsubishi Chemical Group.

Das erfindungsgemäß zu verwendende Polyurethan enthält entweder
(a1) funktionelle Gruppen, die durch Neutralisationsmittel und/oder Quaternisierungsmittel in Kationen überführt werden können, und/oder kationische Gruppen, insbesondere Ammoniumgruppen,
   oder
(a2) funktionelle Gruppen, die durch Neutralisationsmittel in Anionen überführt werden können, und/oder anionische Gruppen, insbeondere Carbonsäure- und/oder Carboxylatgruppen,
   und/oder
(a3) nichtionische hydrophile Gruppen, insbesondere Poly(alkylenether)-Gruppen.

Beispiele geeigneter erfindungsgemäß zu verwendender funktioneller Gruppen (a1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (a1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen.

Beispiele geeigneter erfindungsgemäß zu verwendender funktioneller Gruppen (a2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (a2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (a1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (a2) sind Ammoniak, Ammoniumsalze, wie beispielsweise Ammoniumcarbonat oder Ammoniumhydrogencarbonat, sowie Amine und Aminoalkohole , wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der funktionellen Gruppen (a1) oder (a2) des erfindungsgemäß zu verwendenden Polyurethans (A) neutralisiert werden.

Von diesen funktionellen (potentiell) ionischen Gruppen (a1) und (a2) und funktionellen nichtionischen Gruppen (a3) sind die (potentiell) anionischen Gruppen (a2) vorteilhaft und werden deshalb besonders bevorzugt verwendet.

Die Einführung von (potentiell) anionischen Gruppen (a2) in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solch, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am ###-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die ###,###-Dimethylolalkansäuren der allgemeinen Formel R²-C(CH₂OH)₂COOH, wobei R² für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (a3) können als laterale oder endständige Gruppen in die Polyurethanmoleküle eingeführt werden. Hierfür können beispielsweise Alkoxypoly(oxyalkylen)alkohole mit der allgemeinen Formel R³O-(-CH₂-CHR⁴-O-)₂ H in der R³ für einen Alkylrest mit 1 bis 6 Kohlenstoffatomen, R⁴ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP 0 354 261 A1 oder EP 0 424 705 A 2).

Der Einsatz von Kettenverlängerungsmitteln, wie Polyole, Polyamine und Aminoalkohole führt zur Molekulargewichtserhöhung der Polyurethane.

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vg1. Patentschriften EP 0 339 433 A1, EP 0 436 941 A1 oder EP 0 517 707 A1).

Beispiele geeigneter Polyamine weisen mindestens zwei primäre und/oder sekundäre Aminogruppen auf Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch- z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP 0 089 497 A 1).

Beispiele geeigneter Aminoalkohole sind Ethanolamin oder Diethanolamin.

Die Polyurethane sind in den erfindungsgemäßen Haftgrundierungen vorzugsweise in einer Menge von, bezogen auf ihren Festkörper, 60 bis 99, bevorzugt 65 bis 98,5, besonders bevorzugt 70 bis 98, ganz besonders bevorzugt 75 bis 97,5 und insbesondere 80 bis 97 Gew.-% enthalten.

Methodisch gesehen weist die Herstellung der Polyurethane keine Besonderheiten auf, sondern erfolgt, wie im vorstehend aufgeführten Stand der Technik beschrieben.

Für die erfindungsgemäße Verwendung werden die Polyurethane in Substanz und/oder in organischer Lösung in Wasser oder einem wäßrigen Medium dispergiert. Unter einem wäßrigen Medium wird Wasser verstanden, das lacktypische Bestandteile, wie organische Lösemittel, Cobindemittel, Rheologiehilfsmittel oder Konservierungsmittel, enthält. Wesentlich ist dabei, daß die organischen Lösemittel nicht die wäßrige Natur des Mediums zerstören.

Die erfindungsgemäße Haftgrundierungen enthalten mindestens ein Rheologiehilfsmittel.

Beispiele geeigneter Rheologiehilfsmittel (Verdicker) sind die aus den Patentanmeldungen WO 94/22968, EP 0 276 501 A1, EP 0 249 201 A1 oder WO 97/12945 bekannten; vernetzte polymere Mikroteilchen, wie sie beispielsweise in der EP 0 008 127 A1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, «Verdickungsmittel», Seiten 599 bis 600, und in dem Lehrbuch «Lackadditive» von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A1 zu Einstellung eines strukturviskosen Verhaltens beschrieben werden; oder die Kombination von assoziativen Verdickem auf Polyurethanbasis und Netzmitteln auf Polyurethanbasis, wie sie in der deutschen Patentanmeldung DE 198 35 296 A1 im Detail beschrieben wird; oder die Kombiantion die Kombination von assoziativen Verdickem auf Polyurethanbasis und anorganischen Schichtsilikaten.

Vorzugsweise enthält die erfindungsgemäße Haftgrundierung noch mindestens ein organisches Lösemittel, das wassermischbar ist.

Geeignete wassermischbare organische Lösemittel sind lacktypische Lösemittel, die in jedem Verhältnis mit Wasser mischbar sind, wie sekundär-Butanol, Ethylenglykol, Propylenglykol, Butylglykol und deren Methyl-, Ethyl- oder Propylether, Ketone wie Aceton oder Diacetonalkohol, cyclische Ether wie Tetrahydrofuran oder Dioxan oder Amide wie N,N-Dimethylformamid oder N-Methylpyrrolidon (vgl. Paints Coatings and Solvents, Edit. Dieter Stoye und Werner Freitag, zweite Auflage, Wiley-VCH, und Weinheim, New York, 1998, Seiten 329 und 330).

Es kann auch noch mindestens ein organisches Lösemittel mit verwendet werden, das mit Wasser nicht oder nur in geringem Umfang mischbar ist. Diese Lösemittel nehmen bei 20°C, bezogen auf Wasser und Lösemittel, vorzugsweise weniger als 10, bevorzugt weniger als 9 und insbesondere weniger als 8 New.-% an Wasser auf. Umgekehrt nimmt Wasser bei 20°C, bezogen auf Wasser und Lösemittel, vorzugsweise weniger als 6, bevorzugt weniger als 5 und insbesondere weniger als 4 Gew.-% auf. Beispiele geeigneter in Wasser nicht oder in geringem Umfang mischbarer organischer Lösemittel sind Ketone wie Methylisobutylketon, Diisobutylketon, Cyclohexanon oder Trimethylcyclohexanon, Ether wie Dibutylether, Ester wie Isopropylacetat, Butylacetat, Ethylglykolacetat oder Butylglykolacetat oder höhere Alkohole wie Hexanol, Cyclohexanol, Trimethylcyclohexanol oder 2-Ethyl-1-hexanol (Isooctanol) (vg1. Paints Coatings and Solvents, Edit. Dieter Stoye und Werner Freitag, zweite Auflage, Wiley-VCH, und Weinheim, New York, 1998, Seiten 329 und 330).

Die erfmdungsgemäßen Haftgrundierungen können außerdem noch mindestens ein Konservierungsmittel enthalten. Im Rahmen der vorliegenden Erfindung sind unter Konservierungsmittel Biozide zu verstehen. Beispiele geeigneter Biozide sind topfkonservierende oder filmkonservierende, insbesondere topfkonservierende, Wirkstoffe, wie sie beispielsweise in dem Lehrbuch >>Lackadditive<< von Johan Bieleman, Wiley-VCH, Weinheim, New York, 1998, Seiten 325 bis 345, im Detail beschrieben werden. Bevorzugt werden Formaldehydabspalter verwendet (vgl a. a. O., Seiten 333 und 334).

Des weiteren können die erfindungsgemäßen Haftgrundierungen noch mindestens ein übliches und bekanntes Netzmittel enthalten. Beispiele geeigneter Netzmittel sind Siloxane, fluorhaltige Verbindungen, Carbonsäurehalbester, Phosphorsäureester, Polyacrylsäuren und deren Copolymere oder Polyurethane.

Nicht zuletzt können die erfindungsgemäßen Haftgrundierungen noch mindestens ein übliches und bekanntes Cobindemittel enthalten. Beispiele geeigneter Cobindemittel sind Polyalkylenether wie Poyl(oxyethylen)-, Poly(oxypropylen)- oder Poly(oxyethylen-co-oxypropylen)ether oder Oligotetrahydrofuran-Cobindernittel dieser Art werden beispielsweise von der Firma BASF AG unter der Marke Pluriol® vetrieben.

Darüber hinaus kann die erfindungsgemäße Haftgrundierung noch Zusatzstoffe wie Nanopartikel, UV-Absorber, Lichtschutzmittel, Radikalfänger, Entschäumer, Emulgatoren, Haftvermittler. Verlaufmittel, filmbildende Hilfsmittel, Flammschutzmittel, Hautverhinderungsmittel, Korrosionsinhibitoren, Wachse und/oder Mattierungsmittel enthalten.

Eine besonders vorteilhafte Haftgrundierung ist herstellbar, indem man
(A) eine wäßrige Dispersion mindestens eines der vorstehend beschriebenen, in Wasser löslichen oder dispergierbaren Polyurethane mit
(B) einer wäßrige Dispersion, enthaltend
   (b1) mindestens eines der vorstehend beschriebenen Polyurethane,
   (b2) mindestens eines der vorstehend beschriebenen Rheologiehilfsmittel und
   (b3) mindestens eines der vorstehend beschriebenen organischen Lösemittel sowie gegebenenfalls
   (b4) mindestens eines der vorstehend beschriebenen Konservierungsmittel
vermischt.

Dabei können die in den Dispersionen (A) und (B) enthaltenen Polyurethane gleich oder verschieden sein.

Vorzugsweise haben die erfindungsgemäßen Haftgrundierungen einen Festkörpergehalt von 5 bis 25, bevorzugt 5 bis 24, besonders bevorzugt 6 bis 23, ganz besonders bevorzugt 7 bis 22 und insbesondere 10 bis 20 Gew.-%.

Ihr VOC-Wert (Volatile Organic Compounds) liegt vorzugsweise bei 240 bis 720, insbesondere 300 bis 480 g/l (2 bis 6, insbesondere 2,5 bis 4 lbs./gal).

Die Herstellung der Dispersionen (A) und (B) oder der erfindungsgemäßen Haftgrundierung kann nach allen auf dem Lackgebiet üblichen und bekannten Verfahren erfolgen. Beispielsweise können die vorstehend beschriebenen Ausgangsprodukte einzeln nacheinander oder alle auf einmal in einem geeigneten Mischaggregat, wie Rührkessel, Dissolver oder Ultraturrax, zusammengegeben und miteinader vermischt werden.

Die erfindungsgemäßen Haftgrundierungen werden bei Verfahren zur Lackierung von unbeschichteten Kunststoffoberflächen verwendet. Zu diesem Zweck werden sie auf die unbehandelten unbeschichteten Kunststoffoberflächen appliziert und anschließend mit der Lackierung überschichtet. Hierbei kann die Trockenschichtdicke der erfindungsgemäßen Haftgrundierung breit variieren. Vorzugsweise liegt sie bei 5 bis 50, bevorzugt 6 bis 45, besonders bevorzugt 7 bis 40, ganz besonders bevorzugt 8 bis 35 und insbesondere 9 bis 30 µm.

Die erfindungsgemäßen Haftgrundierungen werden bei Verfahren zur Lackierung von unbeschichteten, nicht vorbehandelten Kunststoffoberflächen verwendet. Zu diesem Zweck werden sie auf die Kunststoffe appliziert und anschließend mit der Lackierung überschichtet.

Beispiele geeigneter Kunststoffe sind ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1).

Außerdem werden die erfindungsgemäßen Haftgrundierungen im Rahmen von Verfahren zur Neu- oder Umlackierung von Altlackierungen verwendet. Dazu werden sie auf die nicht vorbehandelten Altlackierungen appliziert und danach mit der Neulackierung überschichtet. Dabei werden die Altlackierungen in der gesamten umzulackierenden Fläche mit den erfindungsgemäßen Haftgrundierungen beschichtet. Die Altlackierung können sich auf den unterschiedlichsten Substraten befinden. Geeignete Substrate bestehen aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Demnach können die Altlackierungen und die Neulackierungen der Beschichtung von Nutzfahrzeugen und PKW, von Bauwerken im Innen- und Außenbereich, von Möbeln, Türen und Fenstern, von Coils, Container, elektrotechnischen Bauteilen und sonstigen Geräten und Bauteilen des täglichen und industriellen Bedarfs dienen. Vorzugsweise handelt es sich bei den umzulackierenden Altlackierungen um die Originallackierungen von Nutzfahrzeugen und PKW.

Des weiteren werden die erfindungsgemäßen Haftgrundierungen im Rahmen von Verfahren zur Reparaturlackierung auf den vorstehend genannten technologischen Gebieten, insbesondere aber zur Reparaturlackierung von Nutzfahrzeug- und PKW-Originallackierungen verwendet. Zu diesem Zweck werden sie auf die gespachtelte Schadstelle und deren unmittelbare Umgebung, d. h. die Auslaufzonen, appliziert. Hiernach werden sie mit der Reparaturlackierung überschichtet.

Die Altlackierungen, die umlackiert oder ausgebessert werden sollen, können aus den unterschiedlichsten Beschichtungsstoffen hergestellt sein. Es kann sich um farb- und/oder effektgebende Unidecklackierungen oder Mehrschichtlackierungen, enthaltend mindestens eine Basislackierung und mindestens eine Klarlackierung, handeln.

Beispiele für farb- und/oder effektgebende Unidecklackierungen und Basislackierungen gehen aus den vorstehend im Zusammenhang mit der Herstellung von Polyurethanen genannten Patentanmeldungen hervor.

Geeignete Klarlacke sind Ein- oder Mehrkomponentenklarlacke, Pulverklarlacke, Pulverslurryklarlacke, UV-härtbare Klarlacke oder Sealer, wie sie aus den Patentanmeldungen, Patentschriften und Veröffentlichungen DE 42 04 518 A1, EP 0 594 068 A1, EP 0 594 071 A1, EP 0 594 142 A1, EP 0 604 992 A1, EP 0 596 460 A1, WO 94/10211, WO 94/10212, WO 94/10213, WO 94/22969 oder WO 92/22615, US 5,474,811 A1, US 5,356,669 A1 oder US 5,605,965 A1, DE 42 22 194 A1, der Produkt-Information der Firma BASF Lacke + Farben AG, "Pulverlacke", 1990, der Firmenschrift von BASF Coatings AG "Pulverlacke, Pulverlacke für industrielle Anwendungen", Januar 2000, US 4,268,542 A1, DE 195 40 977 A1, DE 195 18 392 A1, DE 196 17 086 A1, DE-A-196 13 547, DE 196 52 813 A1, DE-A-198 14 471 A1, EP 0 928 800 A1, EP 0 636 669 A1, EP 0 410 242 A1, EP 0 783 534 A1, EP 0 650 978 A1, EP 0 650 979 A1, EP 0 650 985 A1, EP 0 540 884 A1, EP 0 568 967 A1, EP 0 054 505 A1, EP 0 002 866 A1, DE 197 09 467 A1, DE 42 03 278 A1, DE 33 16 593 A1, DE 38 36 370 A1, DE 24 36 186 A1, DE 20 03 579 B1, WO 97/46549, WO 99/14254, US 5,824,373 A1, US 4,675,234 A1, US 4,634,602 A1, US 4,424,252 A1, US 4,208,313 A1, US 4,163,810 A1, US 4,129,488 A1, US 4,064,161 A1, US 3,974,303 A1, EP 0 844 286 A1, DE 43 03 570 A1, DE 34 07 087 A1, DE 40 11 045 A1, Die 40 25 215 A1, DE 38 28 098 A1, DE 40 20 316 A1 oder DE 41 22 743 A1 bekannt sind.

Für die Lackierung von unvorbehandelten Kunststoffoberflächen, die Neulackierung oder Umlackierung von Altlackierungen und die Reparaturlackierung können die vorstehend beschriebenen Unidecklacke, Wasserbasislacke und Klarlacke verwendet werden. Vorzugsweise werden Lacke eingesetzt, wie sie üblicherweise für die Reparaturlackierung oder die Lackierung thermisch empfindlicher Substrate angewandt werden.

Die Basislacke sind handelsübliche Produkte, die beispielsweise von der Firma BASF Coatings AG unter den Marken Glasurit® Decklack-Reihe 55 mit Glasurit® Einstellenzusatz 352-91 oder Glasurit® Decklack-Reihe 90 mit Glasurit® Einstellenzusatz 93-E 3 und Glasurit® Beispritzlack 90-M5 gemäß der europäischen Patentanmeldung EP 0 578 645 A1 vertrieben werden.

Als Klarlacke können alle üblichen und bekannten Zweikomponentenklarlacke auf der Basis von handelsüblichen hydroxylgruppenhaltigen Bindemitteln wie Glasurit® Racing-Clear 923-144 und Polyisocyanaten wie Glasurit® MS-Härter 929-71 (beides von der Firma BASF Coatings AG) verwendet werden.

Die Applikation der Beschichtungsstoffe, d.h. der erfindungsgemäßen Haftgrundierungen und der Lacke, kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Bevorzugt werden HVLP-Pistolen eingesetzt. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen der Beschichtungsstoffe und ihres gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem jeweils applizierten Beschichtungsstoff selbst, betrieben wird.

Die Härtung der applizierten Beschichtungsstoffe weist ebenfalls keine Besonderheiten auf, sondern erfolgt mit üblichen und bekannten Vorrichtungen wie Heizstrahlern, die nahes oder fernes Infrarotlicht verwenden, Heizgebläsen oder Umluftöfen. Gegebenenfalls kann die thermische Härtung mit aktinischer Strahlung, insbesondere UV-Strahlung, unterstützt oder ergänzt werden. Für die Härtung mit UV-Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Weitere Beispiele geeigneter Strahlenquellen werden in der deutschen Patentanmeldung DE 198 18 735 A1, Spalte 10, Zeilen 31 bis 61, beschrieben.

Es ist ein ganz besonderer Vorteil der erfindungsgemäßen Haftgrundierungen, daß sie auf den unterschiedlichsten Altlackierungen und unbeschichteten Kunststoffoberflächen auf Dauer besonders fest haften und dabei noch eine hervorragende dauerhafte Haftung zu den Neulackierungen und den Reparaturlackierungen aufweisen. Besonders hervorzuheben ist, daß die Kunststoffoberflächen und die Altlackierungen nicht vorbehandelt werden müssen, um eine sehr gute Haftung zu erzielen. Somit können aufgrund der erfindungsgemäßen Verwendung bei den genannten Verfahren erhebliche Einsparungen an Zeit, Material und Kosten erzielt werden.

### Beispiele

### Herstellbeispiel 1

### Die Herstellung einer Polyurethandispersion

In einem geeigneten Reaktionsgefäß, ausgerüstet mit Rührer, Rückflußkühler und einem Zulaufgefäß, wurden unter Inertgas 130,8 Gewichtsteile eines Polyesters mit einem zahlenmittleren Molekulargewicht von 1.400 Dalton auf Basis einer handelsüblichen ungesättigten Dimerfettsäure (Iodzahl: 10 mgI₂/g, Monomergehalt: maximal 0,1 Gew.-%, Trimergehalt: maximal 2 Gew.%, Säurezahl: 195 bis 200 mg KOH/g und Verseifungszahl: 197 bis 202 mg KOH/g), Isophthalsäure und Hexandiol vorgelegt und nacheinander mit 11,7 Gewichtsteilen Dimethylolpropionsäure, 2,4 Gewichtsteilen Neopentylglykol, 103,4 Gewichtsteilen Methylethylketon und 63,1 Gewichtsteilen Di(4-isocyanatocyclohex-1-yl)methan versetzt. Die resultierende Reaktionsmischung wurde solange unter Rückfluß gehalten, bis ein konstanter Isocyanatgehalt erreicht war. Anschließend wurden der Reaktionsmischung 6,1 Gewichtsteile Trimethylolpropan zugegeben, und es wurde bis zu einer Viskosität von 12 dPas (50%ig angelöst in N-Methylpyrrolidon) unter Rückfluß gehalten. Durch Zugabe von 3,4 Gewichtsteilen n-Butanol wurde eventuell noch vorhandenes, überschüssiges Isocyanat blockiert. Danach wurden der Reaktionsmischung nacheinander 6,1 Gewichtsteile Dimethylethanolamin, 42,8 Gewichtsteile eines Polypropylenglykols mit einem zahlenmittleren Molekulargewicht von 900 Dalton (Pluriol® P 900) und 533,7 Gewichtsteile deionisiertes Wasser zugegeben. Nach dem Entfernen des Methylethylketons im Vakuum erhielt man eine Polyurethandispersion, die mit deionisiertem Wasser auf einen Festkörpergehalt von 30 Gew.-% eingestellt wurde. Der pH-Wert der Dispersion lag bei 7,7.

### Herstellbeispiel 2

### Die Herstellung der Lösung eines wasserdispergierbaren Polyurethans

In einem geeigneten Reaktionsgefäß, ausgerüstet mit Rührer, Rückflußkühler und einem Zulaufgefäß, wurden unter Inertgas 214,7 Gewichtsteile eines Polyesters mit einem zahlenmittleren Molekulargewicht von 1.400 Dalton auf Basis einer handelsüblichen ungesättigten Dimerfettsäure (Iodzahl: 10 mgI₂/g, Monomergehalt: maximal 0,1 Gew.-%, Trimergehalt: maximal 2 Gew.%, Säurezahl: 195 bis 200 mg KOH/g und Verseifungszahl: 197 bis 202 mg KOH/g), Isophthalsäure und Hexandiol vorgelegt und nacheinander mit 19,2 Gewichtsteilen Dimethylolpropionsäure, 4,0 Gewichtsteilen Neopentylglykol, 169,7 Gewichtsteilen Methylethylketon und 103,6 Gewichtsteilen Di(4-isocyanatocyclohex-1-yl)methan versetzt. Die resultierende Reaktionsmischung wurde solange unter Rückfluß gehalten, bis ein konstanter Isocyanatgehalt erreicht war. Anschließend wurden der Reaktionsmischung 10,0 Gewichtsteile Trimethylolpropan zugegeben, und es wurde bis zu einer Viskosität von 10 dPas (50%ig angelöst in N-Methylpyrrolidon) unter Rückfluß gehalten. Danach wurden 452,4 Gewichtsteilen Butylglykol zugegeben. Nach dem Entfernen des Methylethylketon unter Vakuum wurde die Lösung mit 11,7 Gewichtsteilen Dimethylethanolamin neutralisiert und mit Butylglykol auf einen Festkörpergehalt von 44 Gew.-% eingestellt.

### Beispiel 1

### Die Herstellung einer erfindungsgemäßen Haftgrundierung 1

Zur Herstellung der erfindungsgemäßen Haftgrundierung 1 wurden zu 28,9 Gewichtsteilen der Polyurethandispersion des Herstellbeispiel 1 unter Rühren eine Dispersion aus 31,5 Gewichtsteilen deionisiertes Wasser, 0,2 Gewichtsteilen eines Konservierungsmittels (Formaldehydabspalter), 24,3 Gewichtsteilen einer Magnesiumschichtsilikatlösung (3 Gew.-% Laponite® RD, 3 Gew.-% Pluriol® P 900 in deionisiertem Wasser), 10,7 Gewichtsteilen der Polyurethanlösung gemäß Herstellbeispiel 2, 0,2 Gewichtsteilen eines handelsüblichen Rheologiehilfsmittels auf Polyurethanbasis (Acrysol® RM-8 der Firma Rohm und Haas), 1,4 Gewichtsteilen einer handelsüblichen Netzmittellösung (Tensid S, 50%ig in Butylglykol) und 2,8 Gewichtsteilen sekundär-Butanol zugegeben.

Die Mischung wurde anschließend mit deionisiertem Wasser auf eine Viskosität von 18 bis 22 Sekunden DIN4-Becher eingestellt. Die erfindungsgemäße Haftgrundierung 1 wies einen Festkörpergehalt von 15 Gew.-% und einen VOC von 384 g/l (3,2 lbs/gal) auf.

### Beispiel 2

### Die Herstellung einer erfindungsgemäßen Haftgrundierung 2

Für die Herstellung der erfindungsgemäßen Haftgrundierung 2 wurden zu 47,5 Gewichtsteilen der Polyurethandispersion gemäß Herstellbeispiel 1 unter Rühren 28,5 Gewichtsteile deionisiertes Wasser, 0,2 Gewichtsteile des Konservierungsmittels, 17,0 Gewichtsteile der Polyurethanlösung gemäß Herstellbeispiel. 20, 0,6 Gewichtsteile des Rheologiehilfsmittels auf Polyurethanbasis, 1,5 Gewichtsteile der Netzmittellösung und 4,7 Gewichtsteile sekundär-Butanol hinzugegeben.

Die resultierende Mischung wurde vor der Verarbeitung im Volumenverhältnis von 2 : 1 mit einer Magnesiumschichtsilikatlösung aus 1,5 Gew.-% Laponite® RD, 1,0 Gew.-% Pluriol® P 900, 0,2 Gew.-% des Konservierungsmittel und 97,3 Gew.-% deionisiertem Wasser auf Spritzviskosität eingestellt.

Die erfindungsgemäße Haftgrundierung 2 wies einen Festkörpergehalt von 15 Gew.-% und einen VOC-Wert von 384 g/l (3,2 lbs/gal) auf.

### Beispiele 3 und 4

### Die Herstellung von Neulackierungen auf Altlackierungen

Die Haftgrundierungen der Beispiele 1 und 2 wurden auf ungeschliffene, übliche und bekannte PKW-Originallackierungen, bestehend aus Elektrotauchlackierung, Füllerlackierung, Basislackierung und Klarlackierung, in einem Spritzgang mit einer HLVP-Pistole Sata NR95 (1,3 mm, Düseninnendruck 0,7 bar) appliziert. Nach kurzem Ablüften bei Raumtemperatur wurden die Haftgrundierungen 1 und 2 mit einem handelsüblichen Wasserbasislack der Firma BASF Coatings AG und einem handelsüblichen Zweikomponentenklarlack der Firma BASF Coatings AG überschichtet. Nach der Härtung wiesen die Neulackierungen auf den Haftgrundierungen 1 und 2 eine ebenso gute Haftung auf wie auf den Haftgrundierungen, die aus konventionellen Haftgrundierungen hergestellt worden waren.

## Patentansprüche

1. Verwendung von wässrigen, physikalisch härtbaren, strukturviskosen oder thixotropen Beschichtungsstoffen auf Polyurethanbasis als Haftgrundierung für Lackierungen, **dadurch gekennzeichnet, dass** die Haftgrundierung klar und transparent ist.

2. Verwendung nach Anspruch 2, **dadurch gekennzeichnet, dass** die wässrigen, physikalisch härtbaren, strukturviskosen oder thixotropen Beschichtungsstoffe als Haftgrundierung auf unbeschichteten Kunststoffoberflächen oder Altlackierungen verwendet werden.

3. Verwendung nach Anspruch 2, **dadurch gekennzeichnet, dass** die unbeschichteten Kunststoffoberflächen oder die Altlackierungen nicht vorbehandelt sind.

4. Verwendung nach einem der Ansprüche 1 bis 3, **dadurch gekennzeichnet, dass** es sich bei den Altlackierungen um die Altlackierungen von Nutzfahrzeugen und Pkw handelt.

5. Verfahren zur Lackierung von unbeschichteten Kunststoffoberflächen und Altlackierungen durch Applikation mindestens eines Lacks auf die unbeschichteten Kunststoffoberflächen oder die Altlackierungen und Härtung der resultierenden Lackschicht(en), **dadurch gekennzeichnet, dass** man auf die unbeschichteten Kunststoffoberflächen oder die Altlackierungen eine wässrige, physikalisch härtbare, klare und transparente, strukturviskose oder thixotrope Haftgrundierung auf Polyurethanbasis appliziert und mit mindestens einem Lack überlackiert.

6. Verfahren nach Anspruch 5, **dadurch gekennzeichnet, dass** die unbeschichteten Kunststoffoberflächen und die Altlackierungen vor dem Auftragen der wässrigen, klaren, physikalisch härtbaren, strukturviskosen oder thixotropen Haftgrundierung auf Polyurethanbasis nicht vorbehandelt werden.

7. Verfahren nach Anspruch 5 oder 6, **dadurch gekennzeichnet, dass** es sich bei den Altlackierungen um die auszubessernden oder die umzulackierenden Originallackierungen von Nutzfahrzeugen und PKW handelt.

8. Verfahren nach Anspruch 7, **dadurch gekennzeichnet, dass** die Altlackierung (i) im Falle der Reparaturlackierung in der unmittelbaren Umgebung der Schadstelle (Auslaufzonen) und (ii) im Falle der Umlackierung in der gesamten umzulackierenden Fläche mit der wässrigen, klaren, physikalisch härtbaren, strukturviskosen oder thixotropen Haftgrundierung auf Polyurethanbasis beschichtet wird.

9. Verfahren nach einem der Ansprüche 5 bis 8, **dadurch gekennzeichnet, dass** die wässrige, physikalisch härtbare, strukturviskose Haftgrundierung auf Polyurethanbasis herstellbar ist, indem man
(A) eine wässrige Dispersion mindestens eines in Wasser löslichen oder dispergierbaren Polyurethans mit
(B) einer wässrigen Dispersion, enthaltend
(b1) mindestens ein Polyurethan,
(b2) mindestens ein Rheologiehilfsmittel und
(b3) mindestens ein organisches Lösemittel,
vermischt.

10. Verfahren nach Anspruch 9, **dadurch gekennzeichnet, dass** Dispersion (B) mindestens ein Konservierungsmittel (b4) enthält.

11. Verfahren nach Anspruch 9 oder 10, **dadurch gekennzeichnet, dass** die Dispersion (B) mindestens zwei Rheologiehilfsmittel (b2) enthält.

12. Verfahren nach einem der Ansprüche 5 bis 11, **dadurch gekennzeichnet, dass** die Polyurethane herstellbar sind, indem man mindestens ein Diisocyanat mit mindestens einem Polyol, ausgewählt aus der Gruppe, bestehend aus gesättigten und/oder ungesättigten höhermolekularen und/oder niedermolekularen Polyolen, und Verbindungen, durch welche stabilisierende (potentiell) ionische und/oder nichtionische funktionelle Gruppen eingeführt werden, zu einem Isocyanatgruppen enthaltenden Polyurethanpräpolymeren umsetzt, wonach man das Polyurethanpräpolymer mit einem Kettenverlängerungsmittel umsetzt und das resultierende Polyurethan neutralisiert.

## Claims

1. Use of aqueous, physically curable, pseudoplastic or thixotropic, polyurethane-based coating materials as adhesion primer for coatings, **characterized in that** the adhesion primer is clear and transparent.

2. Use according to Claim 1, **characterized in that** the aqueous, physically curable, pseudoplastic or thixotropic coating materials are used as adhesion primer on uncoated plastics surfaces or old coatings.

3. Use according to Claim 2, **characterized in that** the uncoated plastics surfaces or the old coatings have not been pretreated.

4. Use according to any of Claims 1 to 3, **characterized in that** the old coatings comprise those of commercial vehicles and automobiles.

5. Process for coating uncoated plastics surfaces and old coatings by applying at least one coating material to the uncoated plastics surfaces or the old coatings and curing the resulting coating film(s), **characterized in that** an aqueous, physically curable, clear and transparent, pseudoplastic or thixotropic, polyurethane-based adhesion primer is applied to the uncoated plastics surfaces or the old coatings and is overcoated with at least one further coating material.

6. Process according to Claim 5, **characterized in that** the uncoated plastics surfaces and the old coatings are not pretreated prior to the application of the aqueous, clear, physically curable, pseudoplastic or thixotropic, polyurethane-based adhesion primer.

7. Process according to Claim 5 or 6, **characterized in that** the old coatings comprise the original finishes, intended for repair or recoating, of commercial vehicles and automobiles.

8. Process according to Claim 7, **characterized in that** the old coating (i) in the case of refinishing is coated in the direct vicinity of the damage site (taper zones), and (ii) in the case of recoating is coated over the entire area to be recoated, with the aqueous, clear, physically curable, pseudoplastic or thixotropic, polyurethane-based adhesion primer.

9. Process according to any of Claims 5 to 8, **characterized in that** the aqueous, physically curable, pseudoplastic, polyurethane-based adhesion primer is preparable by mixing
(A) an aqueous dispersion of at least one watersoluble or water-dispersible polyurethane with
(B) an aqueous dispersion comprising
(b1) at least one polyurethane,
(b2) at least one rheological assistant, and
(b3) at least one organic solvent.

10. Process according to Claim 9, **characterized in that** dispersion (B) comprises at least one preservative (b4).

11. Process according to Claim 9 or 10, **characterized in that** the dispersion (B) comprises at least two rheological assistants (b2).

12. Process according to any of Claims 5 to 11, **characterized in that** the polyurethanes are preparable by reacting at least one diisocyanate with at least one polyol selected from the group consisting of saturated and/or unsaturated polyols of relatively high molecular mass and/or relatively low molecular mass and compounds by means of which stabilizing (potentially) ionic and/or nonionic functional groups are introduced to give a polyurethane prepolymer containing isocyanate groups, then reacting the polyurethane prepolymer with a chain extender, and neutralizing the resulting polyurethane.

## Revendications

1. Utilisation de substances de revêtement aqueuses, physiquement durcissables, présentant une viscosité de structure ou thixotropiques à base de polyuréthane comme apprêt d'adhérence pour laquages, **caractérisée en ce que** l'apprêt d'adhérence est clair et transparent.

2. Utilisation selon la revendication 1, **caractérisée en ce que** les substances de revêtement aqueuses, physiquement durcissables, présentant une viscosité de structure ou thixotropiques sont utilisées comme apprêt d'adhérence sur des surfaces en matériau synthétique non revêtues ou d'anciens laquages.

3. Utilisation selon la revendication 2, **caractérisée en ce que** les surfaces en matériau synthétique non revêtues ou les anciens laquages ne sont pas prétraité(e)s.

4. Utilisation selon l'une quelconque des revendications 1 à 3, **caractérisée en ce que** les anciens laquages sont des anciens laquages de véhicules utilitaires et de voitures de tourisme.

5. Procédé pour le laquage de surfaces en matériau synthétique non revêtues et d'anciens laquages par application d'au moins une laque sur les surfaces en matériau synthétique non revêtues ou les anciens laquages et durcissement de la ou des couches de laque obtenue(s), **caractérisé en ce qu'**on applique, sur les surfaces en matériau synthétique non revêtues ou les anciens laquages un apprêt d'adhérence aqueux, physiquement durcissable, clair et transparent, présentant une viscosité de structure ou thixotropique à base de polyuréthane et on recouvre par au moins une laque.

6. Procédé selon la revendication 5, **caractérisé en ce que** les surfaces en matériau synthétique non revêtues et les anciens laquages ne sont pas prétraité(e)s avant l'application de l'apprêt d'adhérence aqueux, clair, physiquement durcissable, présentant une viscosité de structure ou thixotropique à base de polyuréthane.

7. Procédé selon la revendication 5 ou 6, **caractérisé en ce que** les anciens laquages sont des laquages d'origine à réparer ou à relaquer de véhicules utilitaires et de voitures de tourisme.

8. Procédé selon la revendication 7, **caractérisé en ce que** l'ancien laquage est revêtu (i) dans le cas d'un laquage de réparation, à proximité immédiate de la zone endommagée (zones d'étalement) et (ii) dans le cas d'un relaquage, dans toute la surface à relaquer, par l'apprêt d'adhérence aqueux, clair, physiquement durcissable, présentant une viscosité de structure ou thixotropique à base de polyuréthane.

9. Procédé selon l'une quelconque des revendications 5 à 8, **caractérisé en ce que** l'apprêt d'adhérence aqueux, physiquement durcissable, présentant une viscosité de structure à base de polyuréthane peut être préparé **en ce qu'**on mélange
(A) une dispersion aqueuse d'au moins un polyuréthane soluble ou dispersible dans l'eau avec
(B) une dispersion aqueuse, contenant
(b1) au moins un polyuréthane,
(b2) au moins un adjuvant de rhéologie et
(b3) au moins un solvant organique.

10. Procédé selon la revendication 9, **caractérisé en ce que** la dispersion (B) contient au moins un agent de conservation (b4).

11. Procédé selon la revendication 9 ou 10, **caractérisé en ce que** la dispersion (B) contient au moins deux adjuvants de rhéologie (b2).

12. Procédé selon l'une quelconque des revendications 5 à 11, **caractérisé en ce que** les polyuréthanes peuvent être préparés **en ce qu'**on transforme au moins un diisocyanate avec au moins un polyol, choisi dans le groupe constitué par les polyols saturés et/ou insaturés, de haut et/ou de bas poids moléculaire, et des composés via lesquels des groupes fonctionnels de stabilisation (potentiellement) ioniques et/ou non ioniques sont introduits, en un prépolymère contenant des groupes isocyanate, suite à quoi on neutralise le prépolymère de polyuréthane avec un agent d'allongement de chaîne et on neutralise le polyuréthane obtenu.
